(19) **Europäisches Patentamt / European Patent Office / Office européen des brevets**

(11) **EP 3 658 881 B1**

(12) # FASCICULE DE BREVET EUROPEEN

(45) Date de publication et mention
de la délivrance du brevet:
**07.07.2021 Bulletin 2021/27**

(21) Numéro de dépôt: **18773524.6**

(22) Date de dépôt: **23.07.2018**

(51) Int Cl.:
*G01M 13/02* (2019.01)          *G01N 29/46* (2006.01)
*G06F 17/14* (2006.01)          *F16H 57/01* (2012.01)

(86) Numéro de dépôt international:
**PCT/FR2018/051886**

(87) Numéro de publication internationale:
**WO 2019/020922 (31.01.2019 Gazette 2019/05)**

(54) **PROCEDE ET DISPOSITIF DE RECHERCHE D'UN DEFAUT SUSCEPTIBLE D'AFFECTER UN DISPOSITIF MECANIQUE TOURNANT DE TRANSMISSION DE PUISSANCE**

VERFAHREN UND VORRICHTUNG ZUR SUCHE NACH EINEM EINE MECHANISCHE ROTIERENDE LEISTUNGSÜBERTRAGUNGSVORRICHTUNG BEEINTRÄCHTIGENDEN DEFEKT

METHOD AND DEVICE FOR SEARCHING FOR A DEFECT CAPABLE OF AFFECTING A ROTATING MECHANICAL POWER TRANSMISSION DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.07.2017 FR 1757165**

(43) Date de publication de la demande:
**03.06.2020 Bulletin 2020/23**

(73) Titulaire: **Safran**
**75015 Paris (FR)**

(72) Inventeurs:
• **BARRAU, Axel**
**77550 Moissy-Cramayel (FR)**
• **HUBERT, Elisa**
**77550 Moissy-Cramayel (FR)**
• **EL BADAOUI, Mohamed**
**77550 Moissy-Cramayel (FR)**

(74) Mandataire: **Cabinet Beau de Loménie**
**158, rue de l'Université**
**75340 Paris Cedex 07 (FR)**

(56) Documents cités:
**US-A1- 2006 150 738     US-A1- 2015 088 435**
**US-B1- 6 507 789**

• **CAPDESSUS C ET AL: "ANALYSE DES VIBRATIONS D'UN ENGRENAGE : CEPSTRE, CORRELATION, SPECTRE", TRAITEMENT DU SIGNAL, CENTRALE DES REVUES, MONTROUGE, FR, vol. 8, no. 5 NO.SPECIAL, 1 janvier 1991 (1991-01-01), pages 365-372, XP000309621, ISSN: 0765-0019**

**Description**

Arrière-plan de l'invention

L'invention concerne le domaine général du suivi (aussi appelé « health monitoring » en anglais) de machines mécaniques tournantes, telles que notamment de machines mécaniques tournantes couramment utilisées dans l'industrie aéronautique.

Elle se rapporte plus particulièrement à la recherche de défauts (ex. usure, fissure, etc.) susceptibles d'affecter un dispositif mécanique tournant de transmission de puissance (ex. engrenage, roulement à billes, moteur, etc.), à partir de signaux (ex. vibratoires, acoustiques ou de vitesse instantanée) générés par ce dispositif mécanique lors de son utilisation.

A l'heure actuelle, la maintenance des dispositifs mécaniques tournants de transmission de puissance tels que ceux utilisés dans l'aéronautique est principalement basée sur une inspection visuelle et endoscopique de ces dispositifs. Lors de la conception de ces dispositifs, un nombre d'heures de fonctionnement (ex. heures de vol lorsque le dispositif est installé dans un aéronef) au bout duquel une maintenance est préconisée est calculé en tenant compte de marges de sécurité relativement importantes. Cette approche souffre toutefois de plusieurs défauts.

En effet, un dispositif tournant en parfait état peut être démonté pour vérification puis être remonté de façon inadaptée ou avec imprécision. Inversement, une telle approche ne permet pas de détecter rapidement un dispositif tournant qui se serait dégradé peu de temps après son montage, ce qui pourrait mettre en danger les utilisateurs du système dans lequel il est installé.

En outre, une inspection visuelle et endoscopique telle qu'elle est pratiquée actuellement est une opération relativement longue et fastidieuse, qui mobilise pour un temps non négligeable le système (ex. moteur d'aéronef) dans lequel le dispositif est installé. Cette inspection dépend par ailleurs d'un opérateur, et peut donc être source d'erreurs.

Pour pallier à ces inconvénients et permettre notamment une détection précise et précoce des défauts susceptibles d'affecter une machine tournante, il est connu pour assurer le suivi d'une telle machine de recourir à une surveillance vibratoire de la machine. Les vibrations (ou signaux vibratoires) générées par une telle machine tournante lors de son fonctionnement représentent en effet une signature très pertinente de son état de santé, reflétant instantanément tout changement affectant sa structure ou son régime de fonctionnement. Ces signaux peuvent être acquis à partir de capteurs positionnés sur ou à proximité des machines tournantes surveillées, tels que par exemple des accéléromètres, etc.

La surveillance vibratoire est donc particulièrement efficace pour la détection de défauts ou de dysfonctionnements affectant les machines tournantes. Elle s'appuie classiquement à cet effet sur l'analyse d'indicateurs standards extraits à partir des signaux vibratoires générés par les machines tournantes comme par exemple leur amplitude crête à crête, leur puissance, leurs moments statistiques ou encore l'amplitude de leurs harmoniques.

Un enjeu majeur des techniques de surveillance vibratoire se situe aujourd'hui dans la localisation des défauts détectés, notamment lorsque la machine tournante à laquelle on s'intéresse est un système composé de plusieurs éléments tournants. La séparation, dans le signal vibratoire acquis, des contributions des différents éléments permet avantageusement de localiser facilement le défaut détecté sur la machine tournante.

Le document de C. Capdessus et al. intitulé « Analyse des vibrations d'un engrenage : cepstre, corrélation, spectre », Traitement du Signal, vol. 8 n°5, montre qu'un dispositif tournant tel qu'un engrenage composé de deux roues dentées tournant à des vitesses de rotation relativement proches génère un signal vibratoire qui peut être modélisé comme le produit de deux signaux (i.e. fonctions) périodiques, et plus particulièrement d'un premier signal ou composante « haute fréquence » représentant l'engrènement et d'un second signal ou composante « basse fréquence » représentant la somme des contributions des deux roues dentées de l'engrenage.

Partant de ce constat, une méthode de surveillance vibratoire connue de l'état de la technique appliquée à un tel engrenage consiste à filtrer, au moyen d'un filtre passe-bande, le spectre du signal vibratoire généré par l'engrenage autour de la fréquence d'engrènement de l'engrenage (préférentiellement autour de l'harmonique dominant concentrant le plus d'énergie). Le spectre ainsi obtenu est ensuite ramené autour de la fréquence nulle. Le signal temporel correspondant au spectre ramené autour de la fréquence nulle est proportionnel à la composante basse fréquence du signal vibratoire généré par l'engrenage, autrement dit au second signal représentant la somme de la contribution des deux roues dentées de l'engrenage. Le filtrage de ce signal proportionnel au second signal permet d'extraire la contribution de chaque roue dentée de l'engrenage. Chaque contribution peut alors être analysée séparément, au moyen notamment des indicateurs précédemment mentionnés (amplitude crête à crête, moments statistiques, etc.), en vue de rechercher la présence d'un éventuel défaut affectant la roue dentée associée. On note que toutes ces opérations sont en général effectuées directement sur le signal temporel.

Cette méthode est particulièrement efficace lorsque l'énergie du signal vibratoire est concentrée sur un unique harmonique. Toutefois, lorsque plusieurs harmoniques sont visibles dans le spectre du signal vibratoire, le filtrage passe-bande opéré ignore une grande partie de l'information portée par le signal vibratoire. Il s'ensuit une imprécision dans les indicateurs calculés et utilisés pour détecter les défauts, entachant ainsi la fiabilité de la détection opérée. Des autres documents faisant partie de l'art antérieur sont le US6507789 B1, le US2015/088435 A1 et le US2006/150738 A1.

Objet et résumé de l'invention

La présente invention a pour but principal de pallier aux inconvénients précités et propose un procédé de recherche d'un défaut susceptible d'affecter un dispositif mécanique tournant de transmission de puissance, ledit dispositif mécanique étant un engrenage d'aéronef comprenant deux roues dentées, comprenant :

- une étape d'obtention d'un signal s pouvant être modélisé par un produit d'un signal haute fréquence s1 et d'un signal basse fréquence s2, généré par le dispositif mécanique tournant de transmission de puissance et acquis par un capteur ;
- une étape de détermination d'estimées des signaux s1 et s2 minimisant une différence entre tout ou partie du signal s et un produit de ces estimées, ladite étape de détermination comprenant :

   o une étape (E22) de ré-échantillonnage d'une séquence issue du signal s d'une durée égale à une durée d'analyse, ladite durée d'analyse étant un multiple entier d'une période du signal basse fréquence s2, ladite séquence issue du signal s étant ré-échantillonnée avec un pas régulier égal à une fraction de la durée d'analyse ;
   o une étape (E23) d'obtention d'une transformée de Fourier discrète de la séquence ré-échantillonnée, ladite transformée de Fourier discrète comprenant une pluralité d'harmoniques ;
   o une étape (E24) de construction d'une matrice M(S) à partir de la transformée de Fourier discrète obtenue, les dimensions de la matrice dépendant d'un nombre d'harmoniques déterminé pour le signal s1 et d'un nombre d'harmoniques déterminé pour le signal s2, chaque composante de la matrice comprenant une amplitude d'un harmonique de la transformée de Fourier discrète obtenue ;
   ◦ une étape (E25) d'approximation de rang 1 de la matrice M(S) et d'obtention de transformées de Fourier discrètes des estimées des signaux s1 et s2 ;

- une étape d'analyse des estimées des signaux s1 et s2 en vue de détecter la présence d'un défaut affectant le dispositif mécanique tournant de transmission de puissance ;
- si un défaut est détecté à l'issue de l'étape d'analyse, une étape de localisation dudit défaut à partir de l'une au moins des estimées des signaux s1 et s2.

Corrélativement, l'invention vise un dispositif de recherche d'un défaut susceptible d'affecter un dispositif mécanique tournant de transmission de puissance, ledit dispositif mécanique étant un engrenage d'aéronef comprenant deux roues dentées, le dispositif de recherche comprenant :

- un module d'obtention configuré pour obtenir un signal s pouvant être modélisé par un produit d'un signal haute fréquence s1 et d'un signal basse fréquence s2, généré par le dispositif mécanique tournant de transmission de puissance et acquis par un capteur ;
- un module de détermination, configuré pour déterminer des estimées des signaux s1 et s2 en minimisant une différence entre tout ou partie du signal s et un produit de ces estimées, ledit module de détermination étant configuré pour :

   ◦ ré-échantillonner une séquence issue du signal s d'une durée égale à une durée d'analyse, ladite durée d'analyse étant un multiple entier d'une période du signal basse fréquence s2, ladite séquence issue du signal s étant ré-échantillonnée avec un pas régulier égal à une fraction de la durée d'analyse ;
   ◦ obtenir une transformée de Fourier discrète de la séquence ré-échantillonnée, ladite transformée de Fourier discrète comprenant une pluralité d'harmoniques ;
   ◦ construire une matrice M(S) à partir de la transformée de Fourier discrète obtenue, les dimensions de la matrice dépendant d'un nombre d'harmoniques déterminé pour le signal s1 et d'un nombre d'harmoniques déterminé pour le signal s2, chaque composante de la matrice comprenant une amplitude d'un harmonique de la transformée de Fourier discrète obtenue ;
   ◦ réaliser une approximation de rang 1 de la matrice M(S) et obtenir des transformées de Fourier discrètes des estimées des signaux s1 et s2 ;

- un module d'analyse, configuré pour analyser les estimées des signaux s1 et s2 en vue de détecter la présence d'un défaut affectant le dispositif mécanique tournant de transmission de puissance ; et
- un module de localisation, activé si un défaut est détecté par le module d'analyse, configuré pour localiser ledit défaut à partir de l'une au moins des estimées des signaux s1 et s2.

L'invention concerne également un système de contrôle non destructif d'un dispositif mécanique tournant de transmission de puissance, ledit dispositif mécanique étant un engrenage d'aéronef comprenant deux roues dentées, le système de contrôle comprenant :

- un capteur configuré pour acquérir un signal s pouvant être modélisé par un produit d'un signal haute fréquence s1 et d'un signal basse fréquence s2, et généré par le dispositif mécanique tournant de transmission de puissance ;
- un dispositif de recherche d'un défaut susceptible d'affecter le dispositif mécanique tournant de transmission de puissance conforme à l'invention, et configuré pour obtenir et utiliser le signal s acquis par le capteur.

L'invention propose donc une technique de surveillance vibratoire s'appuyant sur une démodulation du signal s généré par le dispositif mécanique tournant observé, tout en s'affranchissant d'un filtrage passe-bande tel que pratiqué dans l'état de la technique. On note qu'aucune limitation ne s'attache à la nature du signal s dès lors qu'il peut être modélisé sous la forme d'un produit de deux signaux haute et basse fréquence. Le signal s peut être notamment un signal vibratoire, un signal acoustique ou encore un signal de vitesse instantanée.

L'invention propose à cet effet de remplacer l'étape de filtrage mise en œuvre dans l'état de la technique par une étape d'optimisation : cette étape d'optimisation consiste à minimiser la différence entre tout ou partie du signal s généré par le dispositif mécanique tournant, et qui peut être modélisé par le produit de deux signaux s1 et s2, et un produit des estimées des signaux s1 et s2. Les estimées des signaux s1 et s2 ainsi obtenues à l'issue de l'étape d'optimisation permettent une meilleure reconstruction du signal s acquis par le capteur. A partir des estimées obtenues des signaux s1 et s2 lors de l'étape d'optimisation, la contribution de chaque élément du dispositif mécanique tournant dans le signal s acquis peut alors être aisément et plus précisément identifiée, permettant une localisation facile sur l'un au moins de ces éléments du ou des défauts détectés le cas échéant sur le dispositif.

La mise en œuvre d'une étape d'optimisation s'affranchissant d'un filtrage du signal conformément à l'invention permet avantageusement d'exploiter toute l'information utile contenue dans le signal vibratoire s et conduit à une estimée très précise des signaux s1 et s2. L'invention fournit ainsi une technique de surveillance précise et fiable, pouvant être appliquée aisément à tout type de dispositif mécanique tournant de transmission de puissance dès lors que les signaux (par exemple les signaux vibratoires ou acoustiques ou de vitesse instantanée) générés par celui-ci peuvent être modélisés par le produit d'un signal basse fréquence et d'un signal haute fréquence tels que précités. Un tel dispositif mécanique tournant est typiquement un engrenage formé de deux roues dentées tel que décrit précédemment, mais l'invention s'applique également à d'autres types de dispositifs mécaniques tournant de transmission de puissance, comme par exemple à un moteur thermique ou électrique asynchrone, à un roulement à billes, etc.

Il convient de noter que la technique de surveillance proposée par l'invention nécessite avantageusement l'utilisation que d'un seul capteur pour localiser un défaut détecté le cas échéant sur le dispositif mécanique tournant observé, ce qui facilite sa mise en œuvre.

La prise en considération, pour l'estimée des signaux s1 et s2, d'une séquence du signal s acquis de durée égale à la durée d'analyse permet avantageusement une mise en œuvre de l'invention en temps réel.

Dans un mode particulier de réalisation, le procédé de recherche selon l'invention comprend :

- une étape d'obtention de paramètres cinématiques du dispositif mécanique tournant de transmission de puissance ;
- une étape de détermination, à partir desdits paramètres cinématiques, de la durée d'analyse du signal s.

L'utilisation d'une séquence d'une durée qui est un multiple entier d'une période du signal basse fréquence s2 permet d'obtenir un spectre présentant plusieurs harmoniques autour de chacun desquels se trouve une série de « pics » plus ou moins étalés correspondant au spectre du signal basse fréquence s2. Cette forme du spectre peut être aisément exploitée lors de l'étape d'optimisation mise en œuvre par l'invention. Or un tel spectre peut être avantageusement obtenu dans ce mode de réalisation même si la durée d'analyse est choisie relativement courte (par exemple égale à deux fois la période du signal basse fréquence), ce qui rend possible une implémentation en temps réel du procédé de recherche proposé par l'invention.

Conformément à l'invention, le procédé de recherche comprend en outre une étape de ré-échantillonnage de la séquence issue du signal vibratoire avec un pas régulier égal à une fraction de la durée d'analyse, avant de l'utiliser pour déterminer les estimées des signaux s1 et s2.

Cette étape de ré-échantillonnage permet avantageusement d'obtenir des séries de pics autour de chaque harmonique du spectre qui se présentent sous forme de séries de diracs. L'information contenue dans ces séries de diracs est donc plus facilement exploitable (les pics ne sont pas étalés par effet de bord) et permet d'améliorer la précision de l'estimation des signaux s1 et s2 réalisée par l'invention.

Par ailleurs, le procédé de recherche comprend, lors de l'étape de détermination des estimées des signaux s1 et s2 :

- une étape d'obtention d'une transformée de Fourier discrète (ou TFD) de la séquence ré-échantillonnée issue du signal s, cette transformée de Fourier discrète comprenant une pluralité d'harmoniques ;
- une étape de construction d'une matrice M(S) à partir de la transformée de Fourier discrète obtenue, les dimensions de la matrice dépendant d'un nombre d'harmoniques déterminé pour le signal s1 et d'un nombre d'harmoniques déterminé pour le signal s2, chaque composante de la matrice comprenant une amplitude d'un harmonique de la transformée de Fourier discrète obtenue ;
- une étape d'approximation de rang 1 de la matrice M(S) et d'obtention de transformées de Fourier discrètes des estimées des signaux s1 et s2.

L'invention offre une manière très simple de mettre en œuvre l'étape d'optimisation permettant la détermination des estimées des signaux s1 et s2, et ce, sans perte d'information utile. Une telle optimisation est en effet un problème non linéaire et non quadratique sous contraintes qui peut s'avérer difficile à résoudre, notamment dans un contexte embarqué et temps réel. Grâce à l'étape de ré-échantillonnage du signal s acquis et au réarrangement du spectre ré-échantillonné sous forme matricielle (i.e. sous forme de la matrice M(S)), ce problème d'optimisation peut être ramené à une approximation optimale de rang 1 qui peut être aisément résolu.

Pour réaliser l'approximation de rang 1 de la matrice M(S), différentes techniques peuvent être utilisées.

Ainsi, dans un mode particulier de réalisation :

- l'étape d'approximation de rang 1 de la matrice M(S) utilise une décomposition en valeurs singulières de la matrice M(S), ladite décomposition fournissant un premier vecteur singulier à gauche de la matrice M(S), un premier vecteur singulier à droite de la matrice M(S) et une première valeur singulière de la matrice M(S) ; et
- la transformée de Fourier discrète de l'estimée du signal s1 est obtenue à partir du premier vecteur singulier à gauche de la matrice M(S) et la transformée de Fourier discrète de l'estimée du signal s2 est obtenue à partir du premier vecteur à droite de la matrice M(S), l'un et/ou l'autre des premiers vecteurs singuliers à gauche ou à droite étant pondéré, un produit des pondérations appliquées étant égal à la première valeur singulière de la matrice M(S).

On note qu'au sens de l'invention, les estimées des signaux s1 et s2 déterminées lors de l'étape de détermination ne sont pas nécessairement déterminées dans le domaine temporel, mais peuvent être déterminées dans le domaine fréquentiel. Ainsi les transformées de Fourier discrètes de l'estimée du signal s1 et de l'estimée du signal s2 constituent des estimées des signaux s1 et s2 au sens de l'invention, compte-tenu de la relation connue liant un signal temporel à son spectre et plus spécifiquement à sa transformée de Fourier discrète. Il n'est donc pas nécessaire pour procéder à l'analyse des estimées des signaux s1 et s2 et la recherche de défauts affectant le dispositif mécanique tournant de repasser dans le domaine temporel en transformant, via par exemple une transformée de Fourier inverse, les transformées de Fourier discrètes obtenues lors de l'étape d'obtention.

En outre, les spectres considérés et obtenus ne sont pas nécessairement complets. Ils peuvent être partiels et ne comprendre que les fréquences utiles à l'invention (typiquement les harmoniques du signal s1 et ses modulations par les harmoniques du signal s2). Au sens de l'invention, le terme spectre inclut ces différentes configurations (spectre complet ou seulement partiel).

Ainsi, dans un mode particulier de réalisation, l'étape d'analyse des estimées des signaux s1 et s2 est réalisée directement à partir des transformées de Fourier des estimées des signaux s1 et s2 obtenus lors de l'étape d'obtention.

Dans une variante de réalisation, l'étape de détermination des estimées des signaux s1 et s2 comprend en outre une étape de transformation dans le domaine temporel des transformées de Fourier discrètes obtenues des estimées des signaux s1 et s2.

Le choix d'analyser directement les estimées des signaux s1 et s2 sous leurs formes temporelles ou sous leurs formes fréquentielles dépend des indicateurs considérés pour rechercher les défauts susceptibles d'affecter le dispositif tournant.

Dans un mode particulier de réalisation, le procédé de recherche comprend au moins une étape de filtrage du signal s2 permettant d'identifier des contributions au signal vibratoire de différents éléments du dispositif mécanique, lesdites contributions identifiées étant utilisées lors de l'étape de localisation d'un défaut détecté à l'issue de l'étape d'analyse.

Cette étape permet, à partir du signal s2, d'isoler la contribution de chaque élément du dispositif tournant susceptible d'être affecté par un défaut et de faciliter la localisation de ce défaut. Chaque contribution ainsi isolée est analysée indépendamment l'une de l'autre (en calculant par exemple les indicateurs mentionnés précédemment sur cette contribution), en vue de détecter si elle présente une anomalie. Le cas échéant, la localisation d'un défaut sur l'élément correspondant à la contribution analysée est directe.

Comme mentionné précédemment, l'invention s'applique à la recherche de défauts affectant un engrenage d'aéronef comprenant deux roues dentées mais elle peut également s'appliquer à tout type de dispositifs mécaniques tournants de transmission de puissance, dès lors que les signaux vibratoires générés par ces dispositifs peuvent être modélisés sous la forme d'un produit d'un signal basse fréquence et d'un signal haute fréquence. L'invention a ainsi une application privilégiée mais non limitative dans le domaine de l'aéronautique qui utilise de nombreux dispositifs tournants vérifiant cette hypothèse, tels que par exemple des engrenages comprenant deux roues dentées, des roulements à billes, etc., équipant notamment des aéronefs et plus particulièrement des moteurs d'aéronefs.

Dans un mode particulier de réalisation, les étapes du procédé de recherche selon l'invention sont déterminées par des instructions de programmes d'ordinateurs.

En conséquence, l'invention vise aussi un programme d'ordinateur sur un support d'informations ou d'enregistrement, ce programme étant susceptible d'être mis en œuvre dans un dispositif de recherche ou plus généralement dans un ordinateur, ce programme comportant des instructions adaptées à la mise en œuvre de l'étape de détermination du procédé de contrôle non destructif tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations ou d'enregistrement lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 représente, dans son environnement, un système de contrôle non destructif conforme à l'invention, dans un mode particulier de réalisation ;
- la figure 2 représente l'architecture matérielle d'un dispositif de recherche conforme à l'invention, appartenant au système de contrôle non destructif de la figure 1 ;
- la figure 3 représente, sous forme d'ordinogramme, les principales étapes d'un procédé de recherche conforme à l'invention, tel qu'il est mis en œuvre par le dispositif de recherche de la figure 2 ; et
- les figures 4 et 5 représentent des exemples de transformées de Fourier de signaux pouvant être utilisées lors du procédé de recherche selon l'invention.

Description détaillée de l'invention

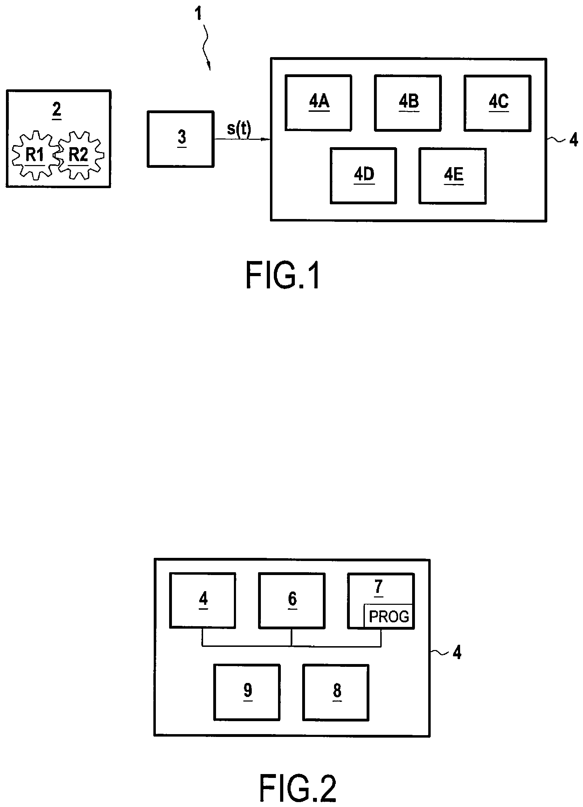

La **figure 1** représente, dans son environnement, un système 1 de contrôle non destructif conforme à l'invention, dans un mode particulier de réalisation.

Le système 1 est configuré pour réaliser le contrôle non destructif d'un dispositif 2 mécanique tournant de transmission de puissance. Dans l'exemple envisagé à la figure 1, le dispositif mécanique tournant 2 est un engrenage constitué de deux roues dentées R1 et R2 à denture droite aptes à se transmettre de la puissance, tel que ceux classiquement utilisés dans l'industrie aéronautique et qui équipent les moteurs d'aéronef.

Les roues dentées R1 et R2 sont des éléments du dispositif mécanique 2 au sens de l'invention. La roue dentée R1 a un nombre entier N1 de dents, et la roue dentée R2 a un nombre entier N2 de dents. N1 et N2 sont supposés connus. On suppose par ailleurs connue la période Te de l'engrènement qui sépare, lorsque l'engrenage 2 est en action, deux dents consécutives.

Il convient de noter que l'invention ne se limite pas à ce type d'engrenages ni même à des engrenages, et peut être appliquée à d'autres dispositifs mécaniques tournants de transmission de puissance, comme par exemple à des roulements à billes, à des moteurs thermiques ou électriques asynchrones, etc.

De façon connue, un tel dispositif mécanique tournant de transmission de puissance génère, lorsqu'il est en action, un signal temporel noté s, de type déterministe, et dont les paramètres sont liés à la cinématique du dispositif mécanique tournant. Ce signal s(t) est ici un signal vibratoire qui peut être modélisé sous la forme d'un produit d'un signal noté s1 haute fréquence et d'un signal noté s2 basse fréquence, soit :

$$s(t)=s1(t) \times s2(t) \quad (Eq.\ 1)$$

En variante, d'autres signaux que des signaux vibratoires peuvent être envisagés dès lors qu'ils peuvent être modélisés comme le signal s sous la forme d'un produit de deux signaux s1 et s2. Ainsi, notamment, le signal s(t) peut être un signal acoustique (traduisant les vibrations de l'air générées par le dispositif mécanique tournant) ou un signal de vitesse instantanée mesuré par un capteur positionné sur un des arbres en rotation.

Le signal haute fréquence s1 est un signal périodique ayant la même fréquence que l'engrènement. Le signal basse fréquence s2 peut s'écrire, dans l'exemple de l'engrenage constitué de deux roues dentées R1 et R2 envisagé ici, sous la forme :

$$s2(t) = 1+sR1(t)+sR2(t) \quad\quad (Eq.\ 2)$$

où sR1(t) désigne un signal de même fréquence que la fréquence de rotation de la roue dentée R1 et sR2(t) désigne un signal de même fréquence que la fréquence de rotation de la roue dentée R2. Autrement dit, le signal s1(t) est modulé en amplitude à la fois par un signal périodique sR1(t) de période égale à la période de rotation de la roue dentée R1 et par un signal périodique sR2(t) de période égale à la période de rotation de la roue dentée R2.

Ainsi, de façon schématique dans cette modélisation, le signal s1(t) représente un signal « moyen » généré par l'engrenage en action, le signal sR1(t) une perturbation du signal s1(t) causée par les défauts (fissures, imperfections, etc.) affectant la roue dentée R1 et le signal sR2(t) une perturbation du signal s1(t) causée par les défauts (fissures, imperfections, etc.) affectant la roue dentée R2. Les signaux sR1(t) et sR2(t) caractérisent les contributions au signal vibratoire des roues dentées R1 et R2 au sens de l'invention.

Conformément à l'invention, le système 1 de contrôle non destructif réalise un contrôle non destructif de l'engrenage 2 à partir du signal vibratoire s(t) généré par celui-ci lorsqu'il est en action. A cet effet, il est équipé d'un capteur 3, localisé à proximité de l'engrenage 2 de façon à mesurer et acquérir le signal s(t). Le capteur 3 est par exemple un accéléromètre ou un microphone. Son placement à proximité de l'engrenage 2 pour lui permettre d'acquérir le signal vibratoire généré par ce dernier ne pose aucune difficulté pour l'homme du métier (il est placé par exemple le plus proche possible d'un palier soutenant l'un des axes des roues de l'engrenage), et dépend du dispositif mécanique tournant considéré et du contexte d'utilisation de ce dernier. Il n'est pas décrit en détail ici.

Le signal vibratoire s(t) acquis par le capteur 3 est transmis à un dispositif 4 du système 1 de contrôle non destructif apte à traiter ce signal et à l'analyser notamment en vue de détecter la présence d'un éventuel défaut sur l'engrenage 2. Le dispositif 4 est un dispositif de recherche d'un défaut conforme à l'invention.

Dans le mode de réalisation décrit ici, le dispositif de recherche 4 a l'architecture matérielle d'un ordinateur, telle qu'illustrée à la **figure 2.**

Il comprend notamment un processeur 5, une mémoire vive 6, une mémoire morte 7, une mémoire flash non volatile 8 ainsi que des moyens de communication 9 permettant notamment au dispositif de recherche 4 de communiquer notamment avec le capteur 3 pour obtenir le signal vibratoire généré par l'engrenage 2 et acquis par ce dernier. Ces moyens de communication comprennent par exemple un bus de données numériques si le dispositif de recherche 4 est embarqué dans le même équipement que l'engrenage 2 (ex. à bord d'un aéronef), ou une interface de communication sur un réseau de télécommunications, etc.

La mémoire morte 7 du dispositif de recherche 4 constitue un support d'enregistrement conforme à l'invention, lisible par le processeur 5 et sur lequel est enregistré un programme d'ordinateur PROG conforme à l'invention.

Le programme d'ordinateur PROG définit des modules fonctionnels et logiciels ici, configurés pour mettre en œuvre un procédé de recherche d'éventuels défauts affectant l'engrenage 2 conforme à l'invention. Ces modules fonctionnels s'appuient sur et/ou commandent les éléments matériels 5-9 du dispositif de recherche 4 cités précédemment. Ils comportent notamment ici, comme illustré sur la figure 1 :

- un module d'obtention 4A configuré pour obtenir le signal vibratoire s mesuré par le capteur 3 et généré par l'engrenage 2 en action, ce module s'appuyant sur les moyens de communication 9 ;
- un module de détermination 4B, configuré pour déterminer des estimées des signaux s1 et s2 dont le produit minimise une différence avec le signal vibratoire s ;
- un module d'analyse 4C, configuré pour analyser les estimées des signaux s1 et s2 déterminées par le module de détermination 4B en vue de détecter la présence d'un défaut affectant le dispositif mécanique tournant de transmission de puissance ; et

- un module de localisation 4D, activé si un défaut est détecté par le module d'analyse 4C, configuré pour localiser ledit défaut à partir de l'une au moins des estimées des signaux s1 et s2.

Dans le mode de réalisation décrit ici, le dispositif de recherche 4 dispose en outre d'un module de notification 4E, apte à notifier un utilisateur ou un équipement distant de l'existence d'un défaut sur l'engrenage le cas échéant. Ce module de notification 4E peut s'appuyer notamment sur les moyens de communication 9 du dispositif de recherche 4 ou sur des moyens d'entrée/sortie de celui-ci, comme par exemple un écran ou un microphone apte à signaler la détection d'un défaut à un utilisateur installé à proximité du dispositif de recherche 4.

Les fonctions de ces différents modules sont décrites plus en détail maintenant en référence aux étapes du procédé de recherche selon l'invention.

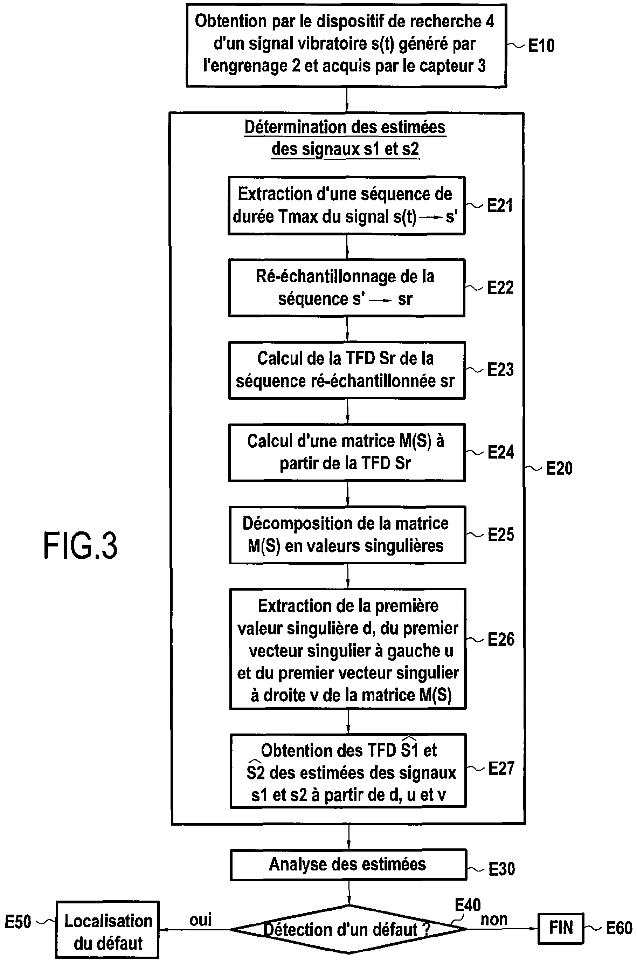

La **figure 3** illustre, sous forme d'ordinogramme, les principales étapes d'un procédé de recherche selon l'invention dans un mode particulier de réalisation dans lequel il est mis en œuvre par le dispositif 4 de recherche du système 1 de contrôle non destructif.

On suppose en préliminaire de ce procédé, que l'engrenage 2 est mis en action avec une période d'engrènement Te, et génère un signal vibratoire s(t) tel que décrit précédemment.

Ce signal vibratoire s(t) est acquis par le capteur 3 sur une durée de mesure prédéterminée notée Tacq, et fourni au dispositif de recherche 4. Le signal vibratoire s(t) est ici un signal échantillonné comprenant une pluralité Nech d'échantillons correspondant à des instants d'échantillonnage $t_1,...,t_{Nech}$ multiple d'une période d'échantillonnage Tech.

Par exemple, on choisit Tacq égale à une fois la période du signal basse fréquence s2. En variante, Tacq peut être choisie égale à plusieurs périodes du signal basse fréquence s2 pour permettre un filtrage du bruit présent dans le signal.

Le signal vibratoire s(t) est obtenu par le module 4A d'obtention du dispositif de recherche 4 via notamment les moyens de communication 9 équipant le dispositif de recherche 4 (étape E10). Le module d'obtention 4A fournit le signal vibratoire s(t) obtenu au module de détermination 4B pour traitement.

Comme mentionné précédemment, le signal vibratoire s(t) généré par l'engrenage 2 et acquis par le capteur 3 est remarquable en ce qu'il peut être modélisé comme le produit d'un signal haute fréquence s1 et d'un signal basse fréquence s2 (cf. équation (Eq. 1) précédente). Par signal haute fréquence et signal basse fréquence, on entend ici que le signal haute fréquence s1 est périodique et a une fréquence supérieure au signal basse fréquence s2 qui est également périodique. Le signal basse fréquence s2 comprend par ailleurs, comme le montre l'équation (Eq. 2), la contribution sR1 due à la roue dentée R1 et la contribution sR2 due à la roue dentée R2. Le traitement du signal vibratoire s(t) par le module de détermination 4B consiste à déterminer une estimée de chacun des signaux s1 et s2 afin de pouvoir les analyser pour détecter la présence le cas échéant d'un défaut affectant l'engrenage.

A cet effet, le module de détermination 4B, contrairement aux traitements connus de l'état de la technique, ne réalise pas un filtrage passe-bande sous-optimal autour de la fréquence d'engrènement de l'engrenage pour extraire le signal basse fréquence s2. Mais il détermine les estimées des signaux s1 et s2 (notées respectivement $\widehat{s1}$ et $\widehat{s2}$) en minimisant une différence entre le signal vibratoire s(t) et le produit de ces estimées, soit en résolvant le problème d'optimisation suivant (étape E20) :

$$(\widehat{s1}, \widehat{s2}) = \text{argmin}_{(\overline{s1,s2})} \left( \sum_{n=1}^{NS} \|s(t_n) - \overline{s1}(t_n)\overline{s2}(t_n)\|^2 \right) \qquad (Eq. 4)$$

où les estimées des signaux s1 et s2 sont recherchées sur l'ensemble des fonctions périodiques de période Te et T2 respectivement.

Les inventeurs ont constaté, que dans un mode de réalisation particulièrement avantageux, ce problème d'optimisation pouvait être résolu de façon très simple via un traitement matriciel moyennant quelques opérations de prétraitement simples réalisées sur le signal vibratoire s(t).

En variante, d'autres techniques de résolution du problème d'optimisation mentionné à l'équation (Eq. 4) peuvent être utilisées par le module de détermination 4B, comme par exemple une descente de gradient, une méthode de Newton ou de Gauss-Newton, des méthodes symboliques, un filtre de Kalman étendu, une descente de gradient stochastique, etc.

Dans le mode de réalisation décrit ici, pour déterminer de manière simple les estimées des signaux s1 et s2, le module de détermination 4B effectue en premier lieu un ré-échantillonnage du signal s(t) (étape E21).

A cet effet, le module de détermination 4B détermine tout d'abord, à partir des paramètres cinématiques de l'engrenage 2, et plus particulièrement du nombre N1 de dents de la roue dentée N1, du nombre N2 de dents de la roue dentée N2, et de la période d'engrènement Te de l'engrenage 2, une durée d'analyse Tmax du signal vibratoire s(t).

On suppose ici que ces paramètres cinématiques de l'engrenage 2 ont été communiqués au dispositif de recherche 4 préalablement, par exemple par un opérateur supervisant le contrôle non destructif réalisé par le système 1 de contrôle non destructif, et sont stockés par exemple dans sa mémoire non volatile 8.

En variante, ces paramètres peuvent être obtenus par le dispositif 4 de recherche en interrogeant un utilisateur via les moyens d'entrée/sortie du dispositif 4 de recherche, ou le dispositif de recherche 4 a pu être configuré préalablement avec ces paramètres, notamment lorsqu'il est embarqué et destiné à opérer de façon autonome sans l'intervention d'un opérateur.

On note que les nombres de dents N1 et N2 dépendent de l'engrenage 2 et sont donc fixés et connus à l'avance. La période d'engrènement Te dépend quant à elle du régime moteur : elle peut être soit fixée à l'avance et imposée au moteur, soit fournie par un opérateur ou un utilisateur comme susmentionné, soit encore être évaluée par un module complémentaire prévu à cet effet.

La durée d'analyse Tmax déterminée par le module de détermination 4B est prise égale ici à un multiple entier Nmax de la période notée T2 du signal basse fréquence s2 (Nmax est un entier supérieur ou égal à 1), i.e. Tmax=Nmax x T2. Pour un engrenage constitué de deux roues dentées R1 et R2 tel qu'envisagé à la figure 1, la période T2 du signal basse fréquence s2 est égale à :

$$T2 = Ntot \times Te$$

où Ntot désigne le plus petit commun multiple de N1 et de N2.

Le choix de Nmax dépend bien entendu de la durée Tacq d'acquisition du signal vibratoire s(t) par le capteur 3 et du contexte d'application de l'invention : on comprend bien en effet que si une application temps réel est souhaitée, on choisira préférentiellement un nombre Nmax petit. Inversement, plus Nmax est choisi grand, plus le bruit affectant le signal sera faible.

Puis, le module de détermination 4B extrait du signal vibratoire s(t) qui lui a été transmis une séquence notée s' de durée égale à la durée d'analyse Tmax (étape E21). Il ré-échantillonne alors la séquence ainsi extraite avec un pas régulier égal à une fraction de la durée d'analyse Tmax (étape E22), soit :

$$\Delta T = Tmax/n \quad (Eq.\ 3)$$

où n désigne un nombre d'échantillons prédéterminé. Ce ré-échantillonnage est réalisé au moyen d'une technique d'interpolation standard, comme par exemple une technique d'interpolation linéaire, ou encore une technique de Whittaker-Shannon, etc. La séquence ré-échantillonnée obtenue est notée sr.

Le choix du nombre entier n résulte d'un compromis : plus n est choisi grand, plus la perte d'information liée au ré-échantillonnage est limitée mais plus la complexité de calcul liée au ré-échantillonnage est élevée. On note toutefois qu'il est inutile de choisir n supérieur à T2/Tech (Tech désignant la période d'échantillonnage du signal s) car il n'y a alors plus de gain d'information.

On note que si le pas de ré-échantillonnage considéré est régulier, il n'en demeure toutefois pas nécessairement constant dans le temps : un pas tel que défini par l'équation (Eq. 3) s'adapte en effet avantageusement à la vitesse de rotation des roues et de l'engrènement (i.e. le ré-échantillonnage réalisé est un échantillonnage « angulaire », déterminé par la variation d'angle des roues). Si les roues accélèrent, le pas de ré-échantillonnage varie pour un nombre n d'échantillons constant.

Grâce à ce ré-échantillonnage, et compte-tenu des caractéristiques du signal vibratoire s(t), on s'assure que le spectre de la séquence sr ré-échantillonnée de durée Tmax extraite du signal vibratoire s(t) est composée d'une série d'harmoniques correspondant au signal haute fréquence s1, chaque harmonique étant entouré de diracs correspondant au motif du spectre du signal basse fréquence s2. On note qu'en l'absence de ré-échantillonnage, les diracs sont remplacés par des « chapiteaux » plus ou moins étalés, ce qui a pour effet d'introduire un bruit qu'il convient de prendre en compte lors du traitement du signal vibratoire (par exemple en approximant chaque chapiteau par un dirac).

Les inventeurs ont eu l'idée judicieuse d'utiliser au niveau du module de détermination 4B la séquence ré-échantillonnée sr comme version approchée du signal vibratoire s(t) pour résoudre le problème d'optimisation donnée par l'équation (Eq. 4), et d'exploiter la propriété du spectre de cette séquence énoncée ci-dessus pour simplifier la résolution du problème d'optimisation.

En effet, l'équation (Eq. 4) peut s'écrire, dans le domaine spectral, sous la forme :

$$(\widehat{S1}, \widehat{S2}) = argmin_{\overline{S1}, \overline{S2}} \left( \left\| Sr - \frac{1}{n}\overline{S1} * \overline{S2} \right\|^2 \right) \qquad (Eq.\ 5)$$

où n désigne le nombre d'échantillons introduit précédemment lors de l'étape de ré-échantillonnage E22, et Sr, $\widehat{S1}$, $\widehat{S2}$ désignent respectivement les transformées de Fourier discrètes des signaux sr, $\widehat{s1}$ et $\widehat{s2}$, || || désigne une norme euclidienne, et * l'opérateur de convolution. On utilise ici une représentation vectorielle des transformées de Fourier discrètes Sr, $\widehat{S1}$, $\widehat{S2}$ et la convention suivante si E() désigne la fonction partie entière : l'harmonique 0 se trouve à la position E((n+1)/2) dans le vecteur Sr, l'harmonique 1 se trouve à la position E((n+1)/2)+1, l'harmonique -1 se trouve à la position E((n+1)/2)-1, etc.

Or, comme grâce au ré-échantillonnage effectué lors de l'étape E21, tous les signaux se présentent dans le domaine spectral sous forme de séries de diracs, la convolution présente dans l'équation (Eq. 5) ne comporte « à chaque opération » qu'un seul terme. Le problème d'optimisation de l'équation (Eq. 5) est ainsi équivalent au problème défini par l'équation (Eq. 6) suivante :

$$\left(\widehat{M(S1)}, \widehat{M(S2)}\right) = argmin_{\overline{M(S1)}, \overline{M(S2)}}\left(\left\|M(S) - \frac{1}{n}\overline{M(S1)}.\overline{M(S2)}^T\right\|^2_{Fro}\right)$$
$$(\text{Eq. 6})$$

où M(S) désigne une matrice dont les composantes correspondent aux amplitudes des diracs de la transformée de Fourier discrète Sr, $\widehat{M(S1)}$ un vecteur colonne dont les composantes correspondent aux amplitudes des diracs de la transformée de Fourier discrète $\widehat{S1}$ (autrement dit c'est le vecteur colonne obtenu en supprimant du vecteur $\widehat{S1}$ les entrées qui ne correspondent pas aux harmoniques du signal si), $\widehat{M(S2)}$ un vecteur colonne dont les composantes correspondent aux amplitudes des diracs de la transformée de Fourier discrète $\widehat{S2}$ (autrement dit c'est le vecteur colonne obtenu en supprimant du vecteur S2 les entrées qui ne correspondent pas aux harmoniques du signal s2), et || ||_Fro désigne la norme matricielle de Froebenius, connue en soi et non rappelée ici. La solution du problème défini par l'équation (Eq. 6) peut être obtenue de façon connue à partir de la première valeur singulière de la matrice M(S), comme décrit plus en détail ci-après.

Ainsi, suite au ré-échantillonnage réalisé à l'étape E22, le module de détermination 4B détermine la transformée de Fourier discrète Sr de la séquence sr ré-échantillonnée (étape E23).

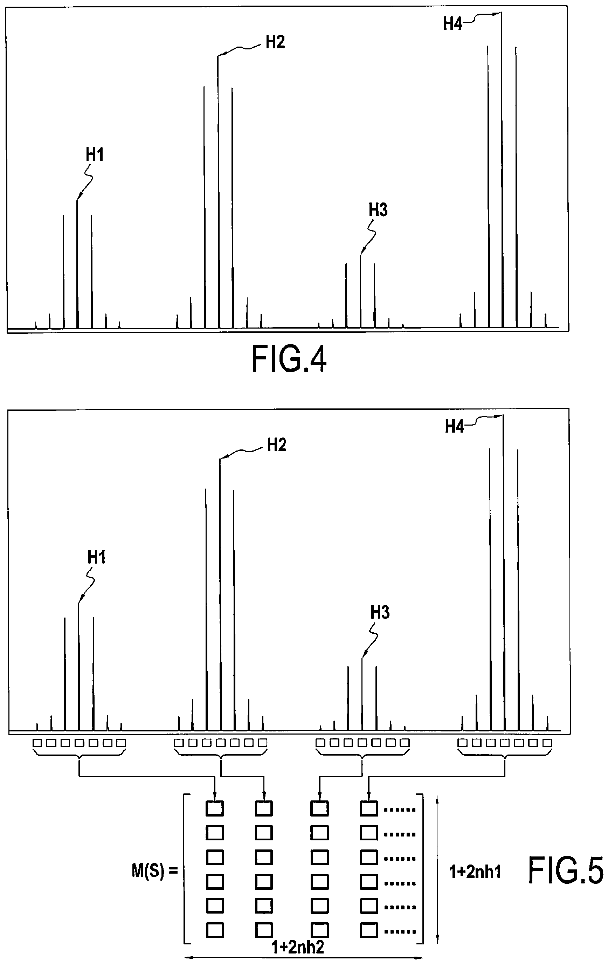

La **figure 4** illustre l'allure de la transformée de Fourier Sr obtenue, en l'absence de bruit. On distingue sur cette figure quatre harmoniques H1, H2, H3 et H4 (correspondant aux harmoniques du signal haute fréquence si), chaque harmonique étant entouré de part et d'autre de façon symétrique d'un ensemble de diracs (trois diracs sur la figure 4 présents de chaque côté de chaque harmonique). Les ensembles de diracs situés de part et d'autre de chaque harmonique du signal haute fréquence s1 correspondent aux harmoniques du spectre du signal basse fréquence s2.

A partir de ce « spectre » de diracs obtenu, le module de détermination 4B construit une matrice M(S) (étape E24) dont les dimensions dépendent d'un nombre entier noté nh1 d'harmoniques déterminé pour le signal haute fréquence s1, et d'un nombre entier nh2 d'harmoniques déterminé pour le signal basse fréquence s2. Dans le mode de réalisation décrit ici, la matrice M(S) a (1+2nh1) lignes et (1+2nh2) colonnes, les composantes de la matrice M(S) correspondant aux amplitudes de diracs sélectionnés dans la transformée de Fourier discrète Sr.

Les nombres d'harmoniques nh1 et nh2 considérés pour chacun des signaux s1 et s2 respectivement dépendent du type de dispositif tournant considéré, et *a fortiori,* du type d'engrenage considéré dans l'exemple de la figure 1. Si un défaut affecte l'engrenage considéré, le nombre d'harmoniques présents dans la transformée de Fourier discrète Sr pour les signaux s1 et s2 peut augmenter, et il convient de considérer des nombres nh1 et nh2 suffisamment importants pour ne pas perdre d'information lors du traitement de la transformée de Fourier discrète Sr. Au contraire, plus le signal vibratoire généré par l'engrenage est de bonne qualité, moins il y a d'harmoniques dans la transformée de Fourier discrète. Les nombres nh1 et nh2 peuvent être déterminés expérimentalement, en faisant des tests sur divers engrenages affectés de divers défauts.

Les inventeurs ont constaté, de façon expérimental, qu'un nombre nh1 environ égal à 10 et un nombre nh2 compris entre 8 et 12 correspondaient à un bon compromis pour couvrir de nombreux engrenages, quel que soit le nombre de dents des roues dentées constituant ces engrenages.

Les positions des différents harmoniques des signaux s1 et s2 dans la transformée de Fourier discrète Sr sont connues à partir des paramètres cinématiques de l'engrenage 2 : elles se situent aux fréquences -nh1.f1, (-nh1+1).f1,...,f1, ...,nh1.f1 pour ce qui des harmoniques du signal s1, et autour de chacune de ces fréquences à - nh2.f2, (-nh2+1).f2,..., f2,..., nh2.f2 pour les harmoniques du signal s2, les fréquences f1 et f2 des signaux s1 et s2 pouvant être dérivées des nombres de dents N1 et N2 et de la période d'engrènement Te suivant les expressions :

$$f1=1/Te$$

et

$$f2=1/T2=f1/Ntot.$$

Connaissant ces positions, le module de détermination 4B construit la matrice M(S) en associant à chaque composante de la matrice la valeur de l'amplitude d'un dirac (harmonique) de la transformée de Fourier Sr, soit si M(S)[i,j] désigne la composante de la matrice se trouvant à l'intersection de la ième ligne et de la jième colonne, pour i nombre entier tel que i=1,2, ,2.nh1+1, et j nombre entier tel que j=1,2, ...,2.nh2+1 :

$$M(S)[i,j]=Sr[N0+(N.(i-nh1-1)+Ntot(j-nh2-1)] \text{ (Eq.7)}$$

avec N0=E((n+1)/2) et N nombre entier vérifiant :

$$N = \frac{Tmax}{Te} = Nmax.Ntot$$

compte-tenu des notations précédemment introduites. L'opération réalisée par le module de détermination 4B pour construire la matrice M(S) est schématisée sur la **figure 5.**

Le module de détermination 4B calcule ensuite une approximation de rang 1 pour la matrice M(S) (approximation de rang 1 pour la norme de Frobenius ici). Le résultat de cette approximation est une matrice dont toutes les colonnes sont proportionnelles les unes aux autres et que l'on peut écrire sous la forme d'un produit de deux termes $\widehat{M(S1)}.\widehat{M(S2)}^T$, à partir desquels il est possible de dériver des estimations des spectres des signaux s1 et s2.

Plusieurs méthodes d'approximation peuvent à cette fin être utilisées par le module de détermination 4B, comme par exemple un algorithme de projection alternée, un algorithme de variables alternées, ou une décomposition complète en valeurs singulières. Ces méthodes peuvent être adaptées pour un fonctionnement en temps réel.

Dans le mode de réalisation décrit ici, le module de détermination 4B utilise pour réaliser l'approximation de rang 1 de la matrice M(S) une décomposition en valeurs singulières de la matrice M(S) (étape E25). Il obtient, à l'issue de cette décomposition, trois matrices U, D et V telles que :

$$M(S)=UDV^H$$

H désignant l'opérateur hermitien, U et V désignant des matrices unitaires et D une matrice diagonale comprenant les valeurs singulières de la matrice M(S). Les matrices unitaires U et V contiennent respectivement les vecteurs singuliers dits à gauche et les vecteurs singuliers dits à droite correspondant aux valeurs singulières contenues dans la matrice diagonale D.

Selon une telle décomposition (ou SVD pour « Singular Value Décomposition » en anglais), les valeurs singulières sont ordonnées dans l'ordre décroissant dans la matrice D. Le module de détermination 4B extrait alors de la matrice D, la première valeur singulière notée d de la matrice M(S) (correspondant à la valeur singulière la plus grande de la matrice), et des matrices U et V, le premier vecteur singulier à gauche de la matrice M(S) noté u et le premier vecteur singulier à gauche de la matrice M(S) noté v correspondant à la première valeur singulière d (étape E26).

Puis il obtient à partir de la valeur singulière d et des vecteurs u et v deux vecteurs représentant deux spectres :

$$\widehat{M(S1)} = d.u$$

et

$$\widehat{M(S2)} = v$$

et correspondant à des estimations des spectres des signaux s1 et s2 respectivement. Ces deux vecteurs contiennent en fait les harmoniques estimés des signaux s1 et s2.

Le module de détermination 4B estime alors, à partir de ces deux vecteurs, les transformées de Fourier discrètes $\widehat{S1}$ d'une estimée du signal s1 et S2 d'une estimée du signal s2 de la façon suivante (étape E27) :

$$\widehat{S1}[N0 + i.N] = \widehat{M(S1)}[nh1 + 1 + i] = d.u[nh1 + 1 + i] \quad \text{pour i=-nh1,...,nh1}$$

$$\widehat{S2}[N0 + i.Nmax] = \widehat{M(S2)}[nh2 + 1 + i.Nmax] = v[nh2 + 1 + i.Nmax] \quad \text{pour} \\ \text{i=-nh2,...,nh2}$$

où u[i], respectivement v[i], désigne la ième composante du vecteur u, respectivement du vecteur v. En d'autres mots, le spectre $\widehat{S1}$ comprend 2.nh1+1 harmoniques dont les amplitudes sont données à la valeur singulière d près par les composantes du vecteur u, et le spectre $\widehat{S2}$ comprend 2.nh2+1 harmoniques dont les amplitudes sont données par les composantes du vecteur v.

On note qu'une convention différente peut être appliquée par le module de détermination 4B pour dériver les transformées de Fourier discrètes $\widehat{S1}$ et $\widehat{S2}$, à savoir que la valeur singulière d n'étant qu'une valeur multiplicative, elle peut être indifféremment appliquée aux composantes du vecteur v au lieu des composantes du vecteur u, soit :

$$\widehat{S1}[N0 + i.N] = u[nh1 + 1 + i] \quad \text{pour i=-nh1,...,nh1}$$

$$\widehat{S2}[N0 + i.Nmax] = d.v[nh2 + 1 + i.Nmax] \quad \text{pour i=-nh2,...,nh2}$$

Il convient de noter que les transformées de Fourier ainsi obtenues par le module de détermination 4B correspondent aux transformées de Fourier discrètes des estimées $\widehat{s1}$ s1 et $\widehat{s2}$ des signaux s1 et s2 qui permettent une reconstruction optimale du signal s à partir du produit des estimées $\widehat{s1}$ et $\widehat{s2}$.

Le module de détermination 4B fournit les transformées de Fourier $\widehat{S1}$ et $\widehat{S2}$ au module d'analyse 4C du dispositif de recherche 4 pour analyse.

En variante, le module de détermination 4B transforme les transformées de Fourier discrètes $\widehat{S1}$ et $\widehat{S2}$ dans le domaine temporel, au moyen d'une transformée de Fourier discrète inverse, avant de les transmettre au module d'analyse 4C. Il transmet alors au module d'analyse 4C directement les estimées $\widehat{s1}$ et $\widehat{s2}$ des signaux s1 et s2.

Le module d'analyse 4C applique alors des techniques d'analyse standards sur les estimées des signaux s1 et s2 qui lui ont été transmises par le module de détermination 4B pour détecter si un défaut affecte l'engrenage 2 (étape E30).

Il peut au préalable filtrer l'estimée du signal s2 de sorte à identifier les contributions de chacune des roues dentées R1 et R2 (i.e. estimées des signaux sR1 et sR2 précédemment introduits), puis appliquer sur chacune des contributions ainsi identifiées les techniques d'analyse standards précitées. Ces techniques peuvent être appliquées soit directement sur la forme spectrale des estimées, soit sur leur forme temporelle.

Par exemple, durant l'étape d'analyse E30, le module d'analyse 4C peut estimer à partir des contributions identifiées des indicateurs de défaillance standards tels que le kurtosis, l'amplitude crête-à-crête ou encore l'amplitude relatives des harmoniques, et comparer ces indicateurs par rapport à un seuil prédéterminé (étape test E40). Le dépassement du seuil par l'un de ces indicateurs de défaillance traduit la présence d'un défaut affectant l'engrenage.

En outre, si ce dépassement est détecté sur la contribution associée à la roue dentée R1, le défaut est localisé sur la roue dentée R1 (étape E50 de localisation au sens de l'invention). Inversement, si ce dépassement est détecté sur la contribution associée à la roue dentée R2, le défaut est localisé sur la roue dentée R2 (étape E50 de localisation au sens de l'invention). Cette localisation permet une maintenance ciblée et efficace de l'engrenage.

Dans le mode particulier de réalisation décrit ici, le défaut détecté le cas échéant et sa localisation sont notifiés par le dispositif de recherche via son module de notification 4E à un opérateur en charge de la maintenance de l'engrenage 2. Cette notification peut se faire par exemple via l'envoi d'un message de notification à l'opérateur ou à un système de maintenance, via l'affichage d'un message sur un écran du dispositif de recherche 4, etc.

L'invention propose donc une méthode très efficace pour traiter le signal vibratoire issu d'un engrenage, et plus généralement d'un dispositif mécanique tournant de transmission de puissance, des signaux parasites issus de l'environnement dans lequel il est installé (ex. moteur d'aéronef), et ce sans recourir à des méthodes complexes de séparation de source s'appuyant sur de multiples capteurs (autant que de sources possibles à séparer), et sans perte d'information résultant de la mise en œuvre d'un filtrage passe-bande. Les contributions des différents éléments du dispositif tournant au signal vibratoire (i.e. des deux roues dans le cas de l'engrenage considéré dans l'exemple de la figure 1) peuvent être étudiées de manière indépendante ce qui permet d'identifier le cas échéant l'élément défectueux.

On note que bien qu'ayant été décrite en référence à un signal vibratoire généré par l'engrenage, l'invention s'applique de façon identique à d'autres types de signaux comme par exemple à un signal acoustique ou de vitesse instantanée.

**Revendications**

1. Procédé de recherche d'un défaut susceptible d'affecter un dispositif (2) mécanique tournant de transmission de puissance, ledit dispositif mécanique étant un engrenage d'aéronef comprenant deux roues dentées, le procédé comprenant :

   - une étape d'obtention (E10) d'un signal s pouvant être modélisé par un produit d'un signal haute fréquence s1 et d'un signal basse fréquence s2, généré par le dispositif mécanique tournant de transmission de puissance et acquis par un capteur ;
   - une étape de détermination (E20) d'estimées des signaux s1 et s2 minimisant une différence entre tout ou partie du signal s et un produit de ces estimées, ladite étape de détermination comprenant :

     ◦ une étape (E22) de ré-échantillonnage d'une séquence issue du signal s d'une durée égale à une durée d'analyse, ladite durée d'analyse étant un multiple entier d'une période du signal basse fréquence s2, ladite séquence issue du signal s étant ré-échantillonnée avec un pas régulier égal à une fraction de la durée d'analyse ;
     ◦ une étape (E23) d'obtention d'une transformée de Fourier discrète de la séquence ré-échantillonnée, ladite transformée de Fourier discrète comprenant une pluralité d'harmoniques ;
     ◦ une étape (E24) de construction d'une matrice M(S) à partir de la transformée de Fourier discrète obtenue, les dimensions de la matrice dépendant d'un nombre d'harmoniques déterminé pour le signal s1 et d'un nombre d'harmoniques déterminé pour le signal s2, chaque composante de la matrice comprenant une amplitude d'un harmonique de la transformée de Fourier discrète obtenue ;
     ◦ une étape (E25) d'approximation de rang 1 de la matrice M(S) et d'obtention de transformées de Fourier discrètes des estimées des signaux s1 et s2 ;
     ◦

   - une étape d'analyse (E30) des estimées des signaux s1 et s2 en vue de détecter la présence d'un défaut affectant le dispositif mécanique tournant de transmission de puissance ;
   - si un défaut est détecté à l'issue de l'étape d'analyse (E40), une étape de localisation (E50) dudit défaut à partir de l'une au moins des estimées des signaux s1 et s2.

2. Procédé de recherche selon la revendication 1 comprenant :

   - une étape d'obtention de paramètres cinématiques du dispositif mécanique tournant de transmission de puissance ;
   - une étape de détermination, à partir desdits paramètres cinématiques, de ladite durée d'analyse du signal s, ladite durée d'analyse étant un multiple entier d'une période du signal basse fréquence s2.

**3.** Procédé de recherche selon la revendication 1 ou 2 dans lequel :

- l'étape d'approximation de rang 1 de la matrice M(S) utilise une décomposition en valeurs singulières de la matrice M(S), ladite décomposition fournissant un premier vecteur singulier à gauche de la matrice M(S), un premier vecteur singulier à droite de la matrice M(S) et une première valeur singulière de la matrice M(S) ; et
- la transformée de Fourier discrète de l'estimée du signal s1 est obtenue à partir du premier vecteur singulier à gauche de la matrice M(S) et la transformée de Fourier discrète de l'estimée du signal s2 est obtenue à partir du premier vecteur à droite de la matrice M(S), l'un et/ou l'autre des premiers vecteurs singuliers à gauche ou à droite étant pondéré, un produit des pondérations appliquées étant égal à la première valeur singulière de la matrice M(S).

**4.** Procédé de recherche selon la revendication 3 dans lequel l'étape de détermination des estimées des signaux s1 et s2 comprend en outre une étape de transformation dans le domaine temporel des transformées de Fourier discrètes obtenues des estimées des signaux s1 et s2.

**5.** Procédé de recherche selon l'une quelconque des revendications 1 à 4 comprenant au moins une étape de filtrage du signal s2 permettant d'identifier des contributions au signal vibratoire de différents éléments du dispositif mécanique, lesdites contributions identifiées étant utilisées lors de l'étape de localisation d'un défaut détecté à l'issue de l'étape d'analyse.

**6.** Procédé de recherche selon l'une quelconque des revendications 1 à 5 dans lequel l'étape d'analyse des estimées des signaux s1 et s2 est réalisée à partir des transformées de Fourier discrètes des estimées des signaux s1 et s2.

**7.** Dispositif (4) de recherche d'un défaut susceptible d'affecter un dispositif mécanique tournant de transmission de puissance, ledit dispositif mécanique étant un engrenage d'aéronef comprenant deux roues dentées, le dispositif de recherche comprenant :

- un module d'obtention (4A) configuré pour obtenir un signal s pouvant être modélisé par un produit d'un signal haute fréquence s1 et d'un signal basse fréquence s2, généré par le dispositif mécanique tournant de transmission de puissance et acquis par un capteur;
- un module de détermination (4B), configuré pour déterminer des estimées des signaux s1 et s2 en minimisant une différence entre tout ou partie du signal s et un produit de ces estimées, ledit module de détermination étant configuré pour :

  o ré-échantillonner une séquence issue du signal s d'une durée égale à une durée d'analyse, ladite durée d'analyse étant un multiple entier d'une période du signal basse fréquence s2, ladite séquence issue du signal s étant ré-échantillonnée avec un pas régulier égal à une fraction de la durée d'analyse ;
  ∘ obtenir une transformée de Fourier discrète de la séquence ré-échantillonnée, ladite transformée de Fourier discrète comprenant une pluralité d'harmoniques ;
  ∘ construire une matrice M(S) à partir de la transformée de Fourier discrète obtenue, les dimensions de la matrice dépendant d'un nombre d'harmoniques déterminé pour le signal s1 et d'un nombre d'harmoniques déterminé pour le signal s2, chaque composante de la matrice comprenant une amplitude d'un harmonique de la transformée de Fourier discrète obtenue ;
  ∘ réaliser une approximation de rang 1 de la matrice M(S) et obtenir des transformées de Fourier discrètes des estimées des signaux s1 et s2 ;

- un module d'analyse (4C), configuré pour analyser les estimées des signaux s1 et s2 en vue de détecter la présence d'un défaut affectant le dispositif mécanique tournant de transmission de puissance ; et
- un module de localisation (4D), activé si un défaut est détecté par le module d'analyse, configuré pour localiser ledit défaut à partir de l'une au moins des estimées des signaux s1 et s2.

**8.** Système (1) de contrôle non destructif d'un dispositif (2) mécanique tournant de transmission de puissance, ledit dispositif mécanique étant un engrenage d'aéronef comprenant deux roues dentées, le système de contrôle comprenant :

- un capteur (3) configuré pour acquérir un signal s pouvant être modélisé par un produit d'un signal haute fréquence s1 et d'un signal basse fréquence s2, et généré par le dispositif mécanique tournant de transmission de puissance ;

- un dispositif (4) de recherche d'un défaut susceptible d'affecter le dispositif mécanique tournant de transmission de puissance conforme à la revendication 7 et configuré pour obtenir et utiliser le signal s acquis par le capteur.

**Patentansprüche**

1. Verfahren zur Suche nach einem eine mechanische rotierende Leistungsübertragungsvorrichtung (2) beeinträchtigenden Defekt, wobei die mechanische Vorrichtung ein Getriebe eines Luftfahrzeugs mit zwei Zahnrädern ist, wobei das Verfahren umfasst:

   - einen Schritt des Erhaltens (E10) eines Signals s, das durch ein Produkt eines Hochfrequenzsignals s1 und eines Niederfrequenzsignals s2 modellierbar ist, erzeugt durch die mechanische rotierende Leistungsübertragungsvorrichtung und erfasst durch einen Sensor;
   - einen Schritt des Bestimmens (E20) von Schätzwerten der Signale s1 und s2 zwecks Minimierung einer Differenz zwischen dem gesamten oder einem Teil des Signals s und einem Produkt dieser Schätzwerte, wobei der Bestimmungsschritt umfasst:

      O einen Schritt (E22) des erneuten Abtastens einer Sequenz im Ergebnis des Signals s einer Dauer gleich einer Analysedauer, wobei die Analysedauer ein ganzes Vielfaches einer Periode des Niederfrequenzsignals s2 ist, wobei die Sequenz im Ergebnis des Signals s in einem regelmäßigen Intervall erneut abgetastet wird, das gleich einer Fraktion der Analysedauer ist;
      ◦ einen Schritt (E23) des Erhaltens einer diskreten Fourier-Transformation der erneut abgetasteten Sequenz, wobei die diskrete Fourier-Transformation eine Vielzahl von harmonischen Anteilen umfasst;
      ◦ einen Schritt (E24) des Aufbaus einer Matrix M(S) auf der Basis der erhaltenen diskreten Fourier-Transformation, wobei die Abmessungen der Matrix von einer bestimmten Anzahl harmonischer Anteile für das Signal s1 und einer bestimmten Anzahl harmonischer Anteile für das Signal s2 abhängen, wobei jede Komponente der Matrix eine Amplitude eines harmonischen Anteils der erhaltenen diskreten Fourier-Transformation umfasst;
      ◦ einen Schritt (E25) einer Rang-1-Approximation der Matrix M(S) und des Erhaltens von diskreten Fourier-Transformationen der Schätzwerte der Signale s1 und s2;

   - einen Schritt des Analysierens (E30) der Schätzwerte der Signale s1 und s2, um die Anwesenheit eines Defekts zu ermitteln, der die mechanische rotierende Leistungsübertragungsvorrichtung beeinträchtigt;
   - wenn im Ergebnis des Analyseschritts (E40) ein Defekt ermittelt wird, einen Schritt des Lokalisierens (E50) des Defekts auf der Basis von mindestens einem der Schätzwerte der Signale s1 und s2.

2. Suchverfahren nach Anspruch 1, umfassend:

   - einen Schritt des Erhaltens von kinematischen Parametern der mechanischen rotierenden Leistungsübertragungsvorrichtung;
   - einen Schritt des Bestimmens, auf der Basis der kinematischen Parameter, der Analysedauer des Signals s, wobei die Analysedauer ein ganzes Vielfaches einer Periode des Niederfrequenzsignals s2 ist.

3. Suchverfahren nach Anspruch 1 oder 2, wobei:

   - der Rang-1-Approximationsschritt der Matrix M(S) eine Zerlegung der Matrix M(S) in Singulärwerte verwendet, wobei die Zerlegung einen ersten Singulärvektor links der Matrix M(S), einen ersten Singulärvektor rechts der Matrix M(S) und einen ersten Singulärwert der Matrix M(S) bereitstellt; und
   - die diskrete Fourier-Transformation des Schätzwerts des Signals s1 auf der Basis des ersten Singulärvektors links der Matrix M(S) erhalten wird und die diskrete Fourier-Transformation des Schätzwerts des Signals s2 auf der Basis des ersten Vektors rechts der Matrix M(S) erhalten wird, wobei der eine und/oder der andere der ersten Singulärvektoren links oder rechts gewichtet werden, wobei ein Produkt der angewendeten Wichtungen gleich dem ersten Singulärwert der Matrix M(S) ist.

4. Suchverfahren nach Anspruch 3, wobei der Schritt des Bestimmens der Schätzwerte der Signale s1 und s2 ferner einen Transformationsschritt der erhaltenen diskreten Fourier-Transformationen der Schätzwerte der Signale s1 und s2 in der Zeitdomäne umfasst.

5. Suchverfahren nach einem der Ansprüche 1 bis 4, umfassend mindestens einen Filterschritt des Signals s2, der gestattet, Beiträge zu dem Vibrationssignal verschiedener Elemente der mechanischen Vorrichtung zu identifizieren, wobei die identifizierten Beiträge beim Lokalisierungsschritt eines im Ergebnis des Analyseschritts ermittelten Defekts verwendet werden.

6. Suchverfahren nach einem der Ansprüche 1 bis 5, wobei der Analyseschritt der Schätzwerte der Signale s1 und s2 auf der Basis der diskreten Fourier-Transformationen der Schätzwerte der Signale s1 und s2 durchgeführt wird.

7. Vorrichtung (4) zur Suche nach einem eine mechanische rotierende Leistungsübertragungsvorrichtung beeinträchtigenden Defekt, wobei die mechanische Vorrichtung ein Getriebe eines Luftfahrzeugs mit zwei Zahnrädern ist, wobei die Suchvorrichtung umfasst:

- ein Modul des Erhaltens (4A), das ausgelegt ist, um ein Signal s zu erhalten, das durch ein Produkt eines Hochfrequenzsignals s1 und eines Niederfrequenzsignals s2 modellierbar ist, erzeugt durch die mechanische rotierende Leistungsübertragungsvorrichtung und erfasst durch einen Sensor;
- ein Modul des Bestimmens (4B), das ausgelegt ist, um Schätzwerte der Signale s1 und s2 zwecks Minimierung einer Differenz zwischen dem gesamten oder einem Teil des Signals s und einem Produkt dieser Schätzwerte zu bestimmen, wobei das Bestimmungsmodul ausgelegt ist, um:

○ eine Sequenz im Ergebnis des Signals s einer Dauer gleich einer Analysedauer erneut abzutasten, wobei die Analysedauer ein ganzes Vielfaches einer Periode des Niederfrequenzsignals s2 ist, wobei die Sequenz im Ergebnis des Signals s in einem regelmäßigen Intervall erneut abgetastet wird, das gleich einer Fraktion der Analysedauer ist;
○ eine diskrete Fourier-Transformation der erneut abgetasteten Sequenz zu erhalten, wobei die diskrete Fourier-Transformation eine Vielzahl von harmonischen Anteilen umfasst;
○ eine Matrix M(S) auf der Basis der erhaltenen diskreten Fourier-Transformation aufzubauen, wobei die Abmessungen der Matrix von einer bestimmten Anzahl harmonischer Anteile für das Signal s1 und einer bestimmten Anzahl harmonischer Anteile für das Signal s2 abhängen, wobei jede Komponente der Matrix eine Amplitude eines harmonischen Anteils der erhaltenen diskreten Fourier-Transformation umfasst;
○ eine Rang-1-Approximation der Matrix M(S) durchzuführen und diskrete Fourier-Transformationen der Schätzwerte der Signale s1 und s2 zu erhalten;

- ein Analysemodul (4C), das ausgelegt ist, um die Schätzwerte der Signale s1 und s2 zu analysieren, um die Anwesenheit eines Defekts zu ermitteln, der die mechanische rotierende Leistungsübertragungsvorrichtung beeinträchtigt; und
- ein Lokalisierungsmodul (4D), das aktiviert ist, wenn ein Defekt vom Analysemodul ermittelt wird, das ausgelegt ist, um den Defekt auf der Basis von mindestens einem der Schätzwerte der Signale s1 und s2 zu lokalisieren.

8. System (1) zur zerstörungsfreien Kontrolle einer mechanischen rotierenden Leistungsübertragungsvorrichtung (2), wobei die mechanische Vorrichtung ein Getriebe eines Luftfahrzeugs mit zwei Zahnrädern ist, wobei das Kontrollsystem umfasst:

- einen Sensor (3), der ausgelegt ist, um ein Signal s zu ermitteln, das von einem Produkt eines Hochfrequenzsignals s1 und eines Niederfrequenzsignals s2 modellierbar ist und von der mechanischen rotierenden Leistungsübertragungsvorrichtung erzeugt wird;
- eine Suchvorrichtung (4) eines Defekts, der die mechanische rotierende Leistungsübertragungsvorrichtung nach Anspruch 7 beeinträchtigen könnte und ausgelegt ist, um das von dem Sensor ermittelte Signal s zu erhalten und zu verwenden.

## Claims

1. A method for searching for a defect likely to affect a rotating mechanical power transmission device (2), said mechanical device being an aircraft gear comprising two toothed wheels, the method comprising:

- a step of obtaining (E10) a signal s which can be modeled by a product of a high-frequency signal s1 and of a low-frequency signal s2, generated by the rotating mechanical power transmission device and acquired by a sensor;

- a step of determining (E20) estimates of the signals s1 and s2 minimizing a difference between all or part of the signal s and a product of these estimates, said determination step comprising:

  ○ a step (E22) of re-sampling a sequence derived from the signal s of a duration equal to an analysis duration, said analysis duration being a integer multiple of a period of the low-frequency signal s2, said sequence derived from the signal s being re-sampled with a regular pitch equal to a fraction of the analysis duration;
  ○ a step (E23) of obtaining a discrete Fourier transform of the re-sampled sequence, said discrete Fourier transform comprising a plurality of harmonics;
  ○ a step (E24) of constructing a matrix M(S) from the discrete Fourier transform obtained, the dimensions of the matrix depending on a number of harmonics determined for the signal s1 and on a number d harmonics determined for the signal s2, each component of the matrix comprising an amplitude of a harmonic of the discrete Fourier transform obtained;
  ○ a step (E25) of performing a rank 1 approximation of the matrix M(S) and obtaining discrete Fourier transforms of the estimates of the signals s1 and s2;

  - a step of analyzing (E30) the estimates of the signals s1 and s2 with a view to detecting the presence of a defect affecting the rotating mechanical power transmission device;
  - if a defect is detected at the end of the analysis step (E40), a step of locating (E50) said defect from the at least one of the estimates of the signals s1 and s2.

2. The search method according to claim 1 comprising:

   - a step of obtaining kinematic parameters of the rotating mechanical power transmission device;
   - a step of determining, from said kinematic parameters, said duration of analysis of the signal s, said analysis duration being a integer multiple of a period of the low-frequency signal s2.

3. The search method according to claim 1 or 2 wherein:

   - the step of performing a rank 1 approximation of the matrix M(S) uses a decomposition into singular values of the matrix M(S), said decomposition providing a first left singular vector of the matrix M(S), a first right singular vector of the matrix M(S) and a first singular value of the matrix M(S); and
   - the discrete Fourier transform of the estimate of the signal s1 is obtained from the first left singular vector of the matrix M(S) and the discrete Fourier transform of the estimate of the signal s2 is obtained from the first right vector of the matrix M(S), either or both of the first left or right singular vectors being weighted, a product of the applied weights being equal to the first singular value of the matrix M(S).

4. The search method according to claim 3, wherein the step of determining the estimates of the signals s1 and s2 further comprises a step of transforming, in the time domain, the discrete Fourier transforms obtained from the estimates of the signals s1 and s2.

5. The search method according to any one of claims 1 to 4 comprising at least one step of filtering the signal s2 making it possible to identify contributions to the vibratory signal of different elements of the mechanical device, said identified contributions being used during the step of locating a defect detected at the end of the analysis step.

6. The search method according to any one of claims 1 to 5, wherein the step of analyzing the estimates of the signals s1 and s2 is carried out from discrete Fourier transforms of the estimates of the signals s1 and s2.

7. A device (4) for searching for a defect likely to affect a rotating mechanical power transmission device, said mechanical device being an aircraft gear comprising two toothed wheels, the search device comprising:

   - an obtaining module (4A), configured to obtain a signal s which can be modeled by a product of a high-frequency signal s1 and of a low-frequency signal s2, generated by the rotating mechanical power transmission device and acquired by a captor;
   - a determination module (4B), configured to determine estimates of the signals s1 and s2 by minimizing a difference between all or part of the signal s and a product of these estimates, said determination module being configured to:

     ○ re-sample a sequence derived from the signal s of a duration equal to an analysis duration, said analysis duration being an integer multiple of a period of the low-frequency signal s2, said sequence derived from the signal s being re-sampled with a regular pitch equal to a fraction of the analysis duration;

○ obtain a discrete Fourier transform of the re-sampled sequence, said discrete Fourier transform comprising a plurality of harmonics;

○ construct a matrix M(S) from the discrete Fourier transform obtained, the dimensions of the matrix depending on a number of harmonics determined for the signal s1 and on a number of harmonics determined for the signal s2, each component of the matrix comprising an amplitude of a harmonic of the discrete Fourier transform obtained;

○ perform a rank 1 approximation of the matrix M(S) and obtain discrete Fourier transforms of the estimates of the signals s1 and s2;

- an analysis module (4C), configured to analyze the estimates of the signals s1 and s2 with a view to detecting the presence of a defect affecting the rotating mechanical power transmission device; and
- a location module (4D), activated if a defect is detected by the analysis module, configured to locate said defect from at least one of the estimates of signals s1 and s2.

8. A non-destructive control system (1) for a rotating mechanical power transmission device (2), said mechanical device being an aircraft gear comprising two toothed wheels, the control system comprising:

- a sensor (3) configured to acquire a signal s which can be modeled by a product of a high-frequency signal s1 and of a low-frequency signal s2, and generated by the rotating mechanical power transmission device;
- a device (4) for searching a defect likely to affect the rotating mechanical power transmission device according to claim 7 and configured to obtain and use the signal s acquired by the sensor.

1

FIG.1

FIG.2

**FIG.3**

Obtention par le dispositif de recherche 4 d'un signal vibratoire s(t) généré par l'engrenage 2 et acquis par le capteur 3 — E10

Détermination des estimées des signaux s1 et s2

Extraction d'une séquence de durée Tmax du signal s(t) → s' — E21

Ré-échantillonnage de la séquence s' → sr — E22

Calcul de la TFD Sr de la séquence ré-échantillonnée sr — E23

Calcul d'une matrice M(S) à partir de la TFD Sr — E24

Décomposition de la matrice M(S) en valeurs singulières — E25

Extraction de la première valeur singulière d, du premier vecteur singulier à gauche u et du premier vecteur singulier à droite v de la matrice M(S) — E26

Obtention des TFD $\widehat{S1}$ et $\widehat{S2}$ des estimées des signaux s1 et s2 à partir de d, u et v — E27

— E20

Analyse des estimées — E30

E50 — Localisation du défaut ← oui ← Détection d'un défaut ? → non → FIN — E60

E40

FIG.4

$M(S) =$

$1+2nh1$

$1+2nh2$

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6507789 B1
- US 2015088435 A1
- US 2006150738 A1

**Littérature non-brevet citée dans la description**

- **C. CAPDESSUS et al.** Analyse des vibrations d'un engrenage : cepstre, corrélation, spectre. *Traitement du Signal,* vol. 8 (5